# DEMANDE DE BREVET EUROPEEN

(11) **EP 3 357 801 A1**
(43) Date de publication de la demande: **08.08.2018**
(21) Numéro de dépôt: 18155333.0
(22) Date de dépôt: 06.02.2018
(51) Int. Cl.: B62H 5/00, B62H 5/06, B62H 5/12, G07F 17/10, G07F 17/00, B62H 3/00

(54) **SYSTEME AUTOMATIQUE DE MISE A DISPOSITION DE CYCLES**

(30) Priorité: 06.02.2017 FR 1750984
(71) Demandeur: JCDecaux SA, 92200 Neuilly-Sur-Seine (FR)
(72) Inventeur: RENARD, Martin, 94230 CACHAN (FR)
(74) Mandataire: Cabinet Plasseraud

(57) **Abrégé**

Système automatique de mise à disposition de cycles comprenant une pluralité de cycles (1) ayant chacun un dispositif antivol, une pluralité de stations comportant chacune des postes de verrouillage (7) où peuvent se verrouiller les cycles (1) et une interface de communication radio courte portée (53) adaptée pour communiquer avec une interface de communication radio courte portée (60a) des cycles. Des moyens de commande (S1, 2) sont adaptés pour autoriser un utilisateur à rendre un cycle (1) hors des postes de verrouillage (7) d'une station (BS) donnée et pour considérer le cycle comme effectivement rendu si le cycle confirme par l'intermédiaire des interfaces de communication radio courte portée (60a, 53), que le dispositif antivol immobilise effectivement le cycle.

## Description

### DOMAINE DE L'INVENTION

La présente invention est relative aux systèmes automatiques de mise à disposition de cycles.

### ARRIERE PLAN DE L'INVENTION

Le document FR2954265A1 décrit un exemple d'un tel système.

Le document KR100948573 décrit un autre exemple de système automatique de mise à disposition de cycles, qui permet de rendre les cycles en station en connectant l'antivol d'un cycle au verrou électrique d'antivol du cycle voisin. Ce système a pour inconvénient que les possibilités de remise de cycles en station restent très limitées lorsque la station comporte déjà de nombreux cycles, les cycles restant connectés les uns aux autres de façon ordonnée par leurs antivols respectifs.

### OBJETS DE L'INVENTION

La présente invention notamment pour but de faciliter la remise des cycles en fin d'utilisation, lorsque tous les postes de verrouillage d'une station sont pleins.

A cet effet, l'invention propose un système automatique de mise à disposition de cycles comprenant :
- une pluralité de cycles comportant chacun :
   - au moins une unité centrale électronique ayant en mémoire un code secret d'antivol propre à un utilisateur au moins à un instant donné,
   - un dispositif antivol comportant un dispositif de blocage électrique adapté pour immobiliser le cycle et commandé par l'unité centrale électronique,
   - une interface utilisateur communiquant avec ladite unité centrale électronique et permettant à un utilisateur d'entrer le code secret d'antivol,
   - et une interface de communication radio courte portée reliée à l'unité centrale électronique du cycle,
- une pluralité de stations comportant chacune des postes de verrouillage où peuvent se verrouiller les cycles et une interface de communication radio courte portée adaptée pour communiquer avec l'interface de communication radio courte portée des cycles,
   - des moyens de commande adaptés pour sélectivement libérer les cycles des postes de verrouillage sur demande d'un utilisateur, les moyens de commande communiquant avec les cycles situés aux stations ou à proximité par lesdites interfaces de communication radio courte portée des stations, les moyens de commande étant adaptés pour autoriser un utilisateur à rendre un cycle hors des postes de verrouillage d'une station donnée et pour considérer le cycle comme effectivement rendu si l'unité centrale du cycle confirme par l'intermédiaire des interfaces de communication radio courte portée (60a, 53) dudit cycle et de ladite station donnée, que dispositif électrique de blocage du dispositif antivol du cycle immobilise effectivement le cycle.

Grâce à ces dispositions, on peut rendre à une station un grand nombre de cycles, même lorsque les postes de verrouillages sont pleins. Les cycles en surnombre peuvent être rendus de façon très flexible compte tenu du mode de verrouillage par leur propre dispositif électrique de blocage d'antivol et compte tenu du mode de communication sans fil avec la station. Pour autant, la remise des cycles en surnombre est contrôlée et peut se faire de façon à ne pas engorger l'espace public, grâce au processus d'autorisation par les moyens de commande.

Dans des modes de réalisation particuliers, le système peut comporter en outre une ou plusieurs des dispositions suivantes :
- les interfaces de communication radio courte portée des stations et des cycles ont une portée inférieure à 50m ;
- le cycle comporte au moins un capteur communiquant avec l'unité centrale électronique du cycle et apte à détecter que le dispositif antivol immobilise le cycle ;
   - le dispositif antivol comporte un lien antivol ;
   - chaque cycle comporte une fourche pivotante portée par une roue avant, et le dispositif antivol (100) est adapté pour bloquer la fourche dans une position tournée où la roue avant fait un angle avec une direction longitudinale du cycle ;
   - le dispositif antivol est adapté pour bloquer une chaîne de transmission mécanique du cycle ;
   - les moyens de commande sont adaptés pour communiquer le code secret d'antivol à l'unité centrale du cycle ;
   - les moyens de commande sont adaptés pour communiquer le code secret d'antivol à l'unité centrale du cycle au moment où le cycle est attribué à un utilisateur ;
   - les moyens de commande sont adaptés pour commander à l'unité centrale du cycle d'effacer le code secret d'antivol lorsque le cycle est considéré comme effectivement rendu ;
   - les moyens de commande sont adaptés pour autoriser un utilisateur à rendre un cycle hors des postes de verrouillage d'une station donnée, après avoir vérifié que l'interface de communication radio courte portée du cycle communique par radio avec l'interface de communication radio courte portée de la station et que la station ne comporte pas de poste de verrouillage disponible ;
   - les moyens de commande (SI, 2) sont adaptés pour communiquer avec une application chargée sur un mobile propre à l'utilisateur, et ladite application est adaptée pour demander l'autorisation aux moyens de commande (S1, 2) de rendre un cycle (1) hors des postes de verrouillage (7) d'une station (BS) et pour recevoir ladite autorisation des moyens de commande.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de stockage de cycles pouvant mettre en oeuvre l'invention,
- la figure 2 est une vue de détail en perspective d'un poste de verrouillage du système de la figure 1,
- la figure 3 est une vue en perspective d'un cycle 1 du système de la figure 1,
- la figure 4 est un schéma bloc des constituants électriques du système de stockage automatique de cycles,
- les figures 5 et 6 sont des vues en perspective montrant le système antivol du cycle du système de la figure 1, respectivement vu de trois quart de dessus et de dessous,
- la figure 7 est une vue schématique partiellement en transparence du verrou du système d'antivol montré en position fermée avec la broche du lien antivol non insérée dans le verrou d'antivol,
- la figure 8 est une vue schématique partiellement en transparence du verrou d'antivol montré en position armée avec la broche non insérée dans le verrou,
- la figure 9 est une vue schématique partiellement en transparence du verrou d'antivol montré en position armée avec la broche insérée dans le verrou,
- la figure 10 est une vue schématique partiellement en transparence du verrou d'antivol montré en position verrouillée avec la broche insérée dans le verrou d'antivol,
- la figure 11 est un logigramme illustrant le fonctionnement du système de verrouillage du cycle,
- la figure 12 représente schématiquement le système de transmission par chaîne du cycle avec un système de blocage de chaîne selon un mode de réalisation,
- les figures 13A et 13B représentent des vues partielles détaillées du système de blocage de la figure 1, respectivement vu de face et de profil,
- la figure 14 représente une vue partielle centrée sur le dispositif de blocage,
- la figure 15 représente en perspective et plus en détail l'élément de blocage et l'actionneur électromécanique,
- la figure 16 est analogue à la figure 15 depuis un point de vue différent,
- la figure 17 est analogue à la figure 15 depuis un point de vue encore différent,
- la figure 18 illustre plus en détail la came rotative,
- la figure 19 représente une variante avec un pignon freiné sur l'élément de blocage.

### DESCRIPTION PLUS DETAILLEE

Sur les différentes figures, les mêmes références désignent des éléments identiques ou similaires.

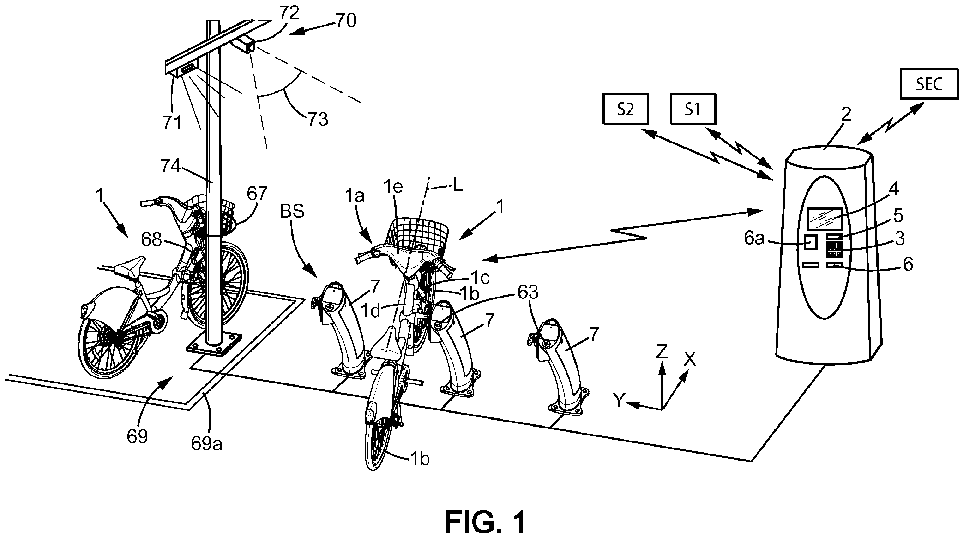

La figure 1 montre un système automatique de stockage de cycles 1 tels que notamment des bicyclettes, permettant par exemple de stocker des cycles sur la voie publique de façon à les mettre à disposition du public.

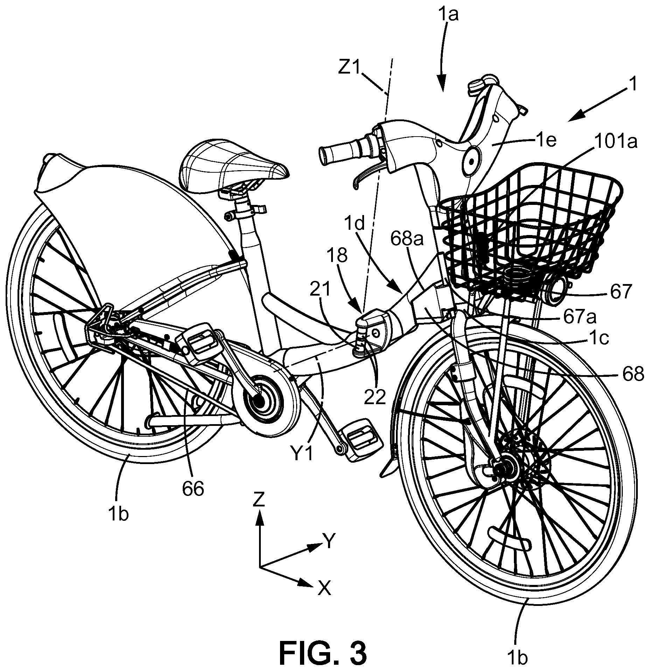

Comme représenté sur les figures 1 et 3, chaque cycle 1 peut comporter une structure la montée sur deux roues 1b, la structure la incluant un cadre 1d et une fourche 1c portant un guidon le et montée pivotante sur le cadre 1d. Le cadre 1d s'étend dans une direction longitudinale L du cycle 1.

Chaque cycle 1 peut en outre comporter un lien antivol 67, par exemple un câble ou une chaîne dont une extrémité 101a est fixée à la fourche 1c et l'autre extrémité 101b, qui est libre, comporte une broche rigide 67a qui peut s'engager et se verrouiller dans un verrou d'antivol 68. Le verrou d'antivol 68 peut avantageusement être électrique à code et comporter un clavier 68a ou similaire qui permet de commander le verrou d'antivol 68. La coopération du lien antivol 67 et du verrou d'antivol 68 va être décrite plus en détail ci-dessous.

Ce système automatique de stockage de cycles peut comporter plusieurs stations BS de stockage de cycles, dont une est représentée sur la figure 1, comportant des postes de verrouillage 7. A chaque station de stockage de cycles BS peut correspondre un poste de commande de station 2, qui peut par exemple se présenter sous la forme d'une borne interactive dotée d'une interface utilisateur comprenant par exemple un clavier 3, un écran 4 tactile ou autre, un lecteur de cartes portatives électroniques 5, un dispositif 6 d'impression de tickets, un lecteur de carte sans contact 6a, etc.

La borne interactive 2 communique d'une part, avec un serveur central SI qui gère les abonnements et les locations de cycles, et d'autre part, le cas échéant avec un serveur S2 qui peut gérer des services aux utilisateurs accessibles sur la borne interactive 2. La communication avec les serveurs S1, S2 peut se faire notamment par voie radio.

La borne interactive 2 peut également communiquer le cas échéant, notamment par voie radio et en particulier par une liaison radio courte portée (par exemple au protocole Zigbee® ou autre), avec les cycles 1 verrouillés à la station BS ou situés à proximité.

De plus, la borne interactive 2 peut éventuellement communiquer, par exemple par voie filaire ou radio courte portée, avec un dispositif de sécurisation 70. Le dispositif de sécurisation 70 peut comporter par exemple un dispositif d'éclairage 71 adapté pour éclairer la station BS et / ou une caméra 72 dont le champ de vision 73a couvre la station BS. Le dispositif d'éclairage 71 et / ou la caméra 72 peuvent être montés en hauteur, par exemple sur un poteau 74, un bâtiment, un élément de mobilier urbain, ou autre. Eventuellement, le dispositif de sécurisation 70 pourrait être intégré à la borne interactive 2. En variante, le dispositif de sécurisation 70 pourrait être commandé depuis le serveur SI ou un autre dispositif de commande distant appartenant au système.

Enfin, la borne interactive 2 communique, par exemple par voie filaire ou radio courte portée, avec les postes de verrouillage 7 de la station BS, sur lesquels peuvent se verrouiller des cycles 1. Les postes de verrouillage peuvent se présenter notamment sous forme de bornes fixées au sol. Chaque cycle 1 comporte un premier organe d'accrochage qui sera décrit ci-après, et qui est adapté pour se verrouiller sur un deuxième organe d'accrochage appartenant à n'importe quel poste de verrouillage 7 du système, sur n'importe quelle station BS du système.

La station BS peut également comporter une zone de dépose de cycles 69, délimitée par exemple par un marquage au sol 69a, qui est utilisable pour rendre un cycle 1 lorsque tous les postes de verrouillage 7 de la station sont occupés, comme il sera décrit ci-après.

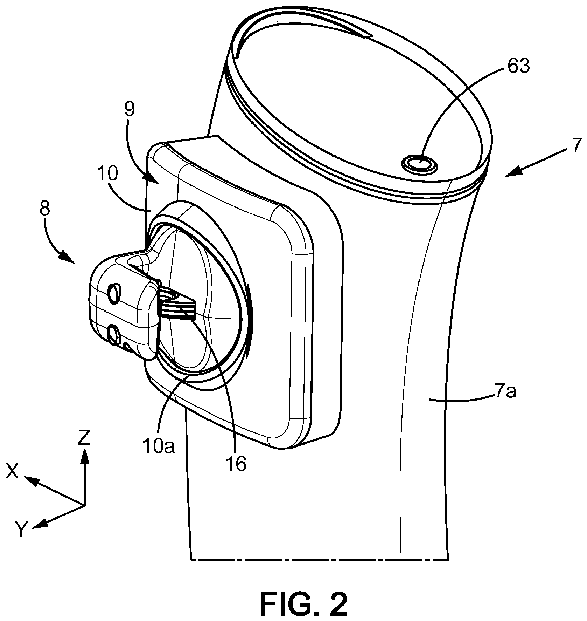

Comme on peut le voir sur la figure 2, le deuxième organe d'accrochage de chaque poste de verrouillage 7 peut éventuellement se présenter sous forme d'une gâche 8 rigide, montée par exemple articulée sur un support 9 solidaire de la structure 7a du poste de verrouillage.

Cette gâche 8 peut être par exemple en forme de C ouvert verticalement vers le haut et vers le bas ainsi qu'horizontalement dans une direction d'engagement du premier organe d'accrochage appartenant au cycle 1.

La gâche 8 peut être articulée sur le support 9, par exemple par une rotule.

La gâche 8 comporte un organe de verrouillage mobile 16, qui est actionné par un actionneur électrique (non représenté) contenu dans le support 9 et de type connu en soi. L'organe de verrouillage peut être sollicité élastiquement vers la positon de verrouillage où il est à même de bloquer le premier organe d'accrochage du cycle dans la gâche 8 pour verrouiller le cycle 1 sur le poste de verrouillage 7, et il peut être actionné par ledit actionneur électrique vers une position escamotée où il libère le premier organe d'accrochage et donc le cycle 1.

Comme représenté sur la figure 3, le premier organe d'accrochage 18 du cycle 1 est monté sur la structure la du cycle 1, notamment sur le cadre 1d.

Le premier organe d'accrochage 18 peut être sensiblement en forme d'anneau rigide, comportant un barreau rigide 21 orienté selon un axe Z1 qui est sensiblement vertical dans la position normale d'utilisation du cycle.

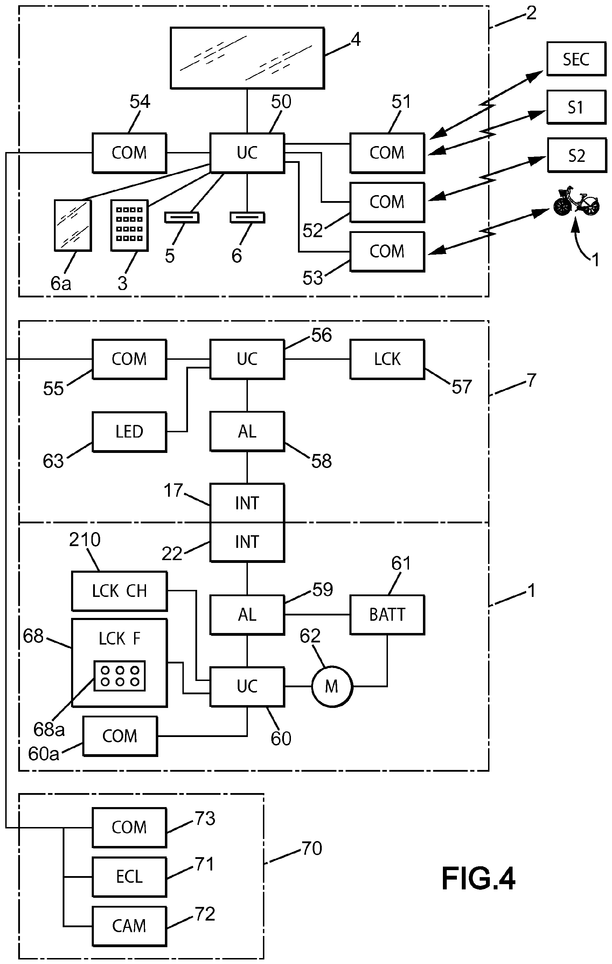

Le barreau 21 peut éventuellement être réalisé en matériau électriquement isolant et comporter deux contacts électriques 22 superposés adaptés pour venir en contact électrique avec des contacts électriques 17 de la gâche (figure 4) lorsque le premier organe d'accrochage 18 est verrouillé sur la gâche 8, de façon à faire communiquer l'électronique du poste de verrouillage 7 avec l'électronique embarquée du cycle 1, et le cas échéant de façon à charger une batterie du cycle 1, notamment s'il s'agit d'un cycle à assistance électrique.

Comme représenté sur la figure 4, la borne interactive 2 peut comporter au moins une unité centrale électronique 50 (UC) telle qu'un micro-ordinateur ou similaire, reliée à :
- des interfaces de communication radio 51, 52, 53 (COM) respectivement avec les serveurs S1, S2 et avec les cycles 1 situés dans la station ou à proximité immédiate, l'interface de communication 53 pouvant être une interface radio fonctionnant par exemple sous le protocole Zigbee®, comme indiqué précédemment,
- une interface de communication 54 (COM) pour la communication avec les postes de verrouillage 7 de la station BS,
- les interfaces utilisateur 3, 4, 5, 6, 6a susmentionnées et éventuellement d'autres.

Chaque poste de verrouillage 7 peut comporter une unité centrale électronique 56 (UC) telle qu'un microcontrôleur ou autre, reliée :
- à l'actionneur de déverrouillage 57 (LCK) qui commande l'organe de verrouillage 16 susmentionné,
- à une interface de communication 55 (COM) communiquant avec l'interface 54 susmentionnée,
- à un dispositif d'alimentation électrique 58 (AL) relié au réseau électrique ou à une autre source d'énergie électrique, et lui-même relié aux contacts électrique 17 (INT) susmentionnés.

Chaque cycle 1 peut comporter également une unité centrale électronique 60 (UC) telle qu'un microcontrôleur ou autre, reliée :
- à la batterie 61 (BATT) et au moteur électrique 62 (M) du cycle si le cycle est à assistance électrique (ces éléments sont facultatifs ; l'invention s'applique aussi bien aux cycles avec ou sans assistance électrique),
- à un dispositif d'alimentation électrique 59 (AL) relié aux contacts 22 susmentionnés (INT), eux-mêmes reliés aux contacts électrique 17 (INT) susmentionnés du poste de verrouillage 7 lorsque le cycle est verrouillé sur un poste de verrouillage,
- à un dispositif électrique de verrouillage 210 (LCK CH) de la chaîne 66 du vélo,
- à un verrou électrique 68 à code (LCK F) adapté pour recevoir et verrouiller le lien antivol 67 du cycle 1, le verrou 68 ayant de plus une interface utilisateur 68a telle que clavier, adaptée pour recevoir un code secret d'activation ;
- une interface de communication radio 60a, fonctionnant par exemple sous le protocole Zigbee® et adaptée pour communiquer avec l'interface de communication 53 susmentionnée de la borne interactive 2.

Le verrou d'antivol 68 peut éventuellement inclure aussi une unité centrale électronique (non représentée) qui communique avec l'unité centrale électronique 60 du cycle.

Le dispositif de sécurisation 70 peut comporter une interface de communication 73 (COM) permettant à l'unité centrale 50 de la borne interactive de communiquer avec le dispositif d'éclairage 71 (ECL), la caméra 72 (CAM) ou tout autre dispositif de sécurité. Ce dispositif de sécurisation peut être omis sans sortir du cadre de la présente invention.

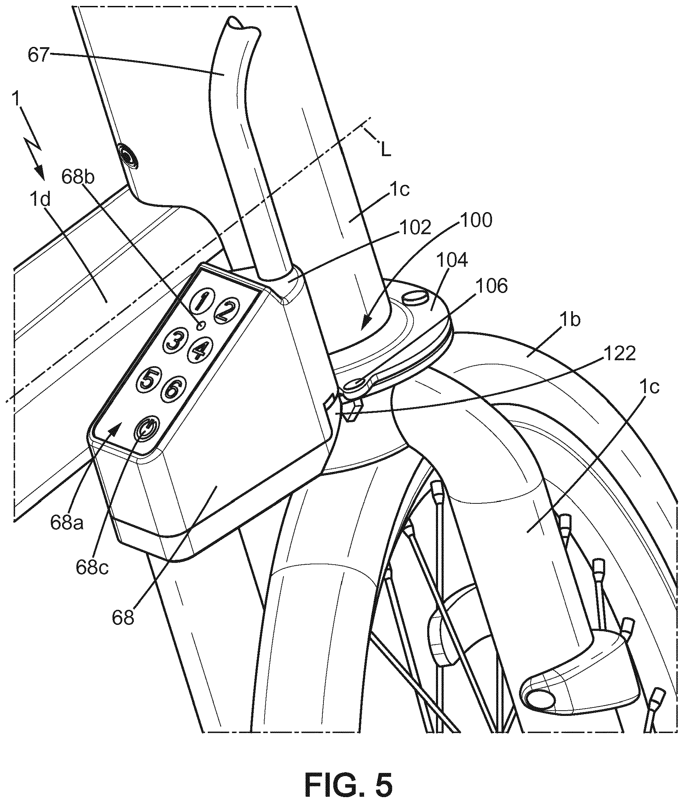

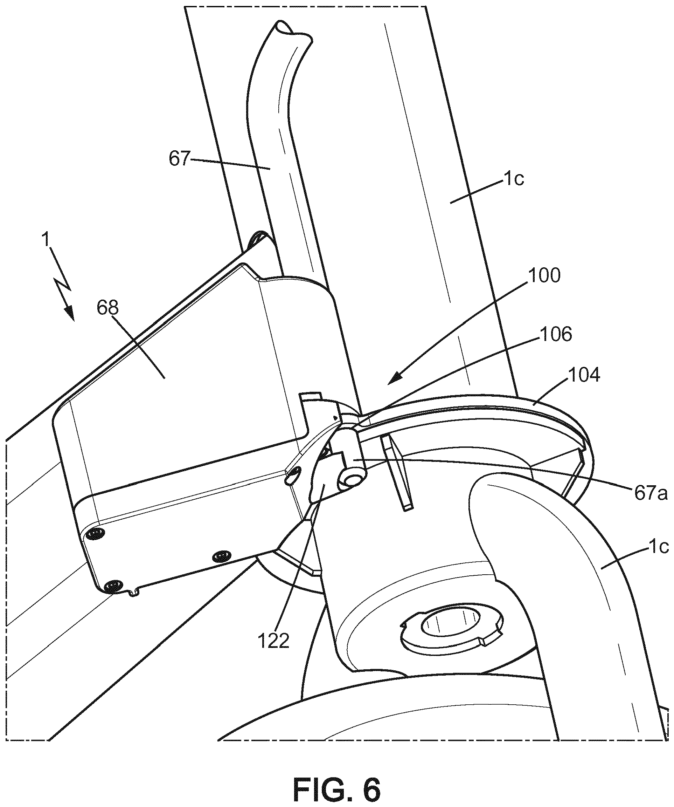

Le câble d'antivol 67 et le verrou d'antivol 68 susmentionnés appartiennent à un système antivol 100 qui va maintenant être décrit en détail et qui est visible notamment sur les figures 5 et 6.

La broche 67a de l'extrémité libre 101b du lien antivol 67 est insérable dans une ouverture 102 du verrou d'antivol 68. L'ouverture 102 peut être traversante. L'ouverture 102 peut notamment se présenter sous la forme d'un puits sensiblement vertical (dans la position normale d'utilisation du cycle), ouvert vers le haut et vers le bas. Le verrou d'antivol 68 est actionnable par l'intermédiaire d'un code secret connu de l'utilisateur à rentrer sur l'interface utilisateur susmentionnée 68a.

Le système antivol 100 inclut de plus un organe de blocage de fourche 104 fixé à la fourche 1c. L'organe de blocage de la fourche 104 permet de bloquer la roue 1b avant dans une position tournée, non-parallèle avec la direction longitudinale L du cycle 1, lorsque la broche 67a est verrouillée par le verrou 68, afin de rendre le vol du cycle 1 plus difficile.

À cet effet, l'organe de blocage de fourche 104 inclut une ouverture 106 dimensionnée pour recevoir la broche 67a lorsqu'elle est verrouillée dans le verrou d'antivol 68. L'organe de blocage de la fourche 104 peut prendre la forme d'une couronne. La couronne 104 est disposée, dans ce mode de réalisation, sous le verrou d'antivol 68. En faisant pivoter le guidon le, l'ouverture 106 de l'organe de blocage de la fourche 104 peut être positionnée en alignement avec l'ouverture 102 du verrou d'antivol 68. Pour faciliter cet alignement, la position d'alignement des ouvertures 102, 106 peut correspondre à une position de butée de fin de course du guidon le.

Tant que les ouvertures 102 et 106 ne sont pas alignées, la broche 67a ne peut pas être complètement engagée dans l'ouverture 102 du verrou d'antivol et le verrou d'antivol ne peut pas être verrouillé. Lorsque les ouvertures 102 et 106 sont alignées, la broche 67a peut les traverser communément et ainsi, lorsque le verrou d'antivol 68 est verrouillé, maintenir et sécuriser la fourche 1c angulairement en position tournée par rapport au cadre 1d, en plus de la sécurisation déjà apportée par le câble antivol qui peut classiquement être passé autour d'un élément fixe (arbre, poteau ou autre).

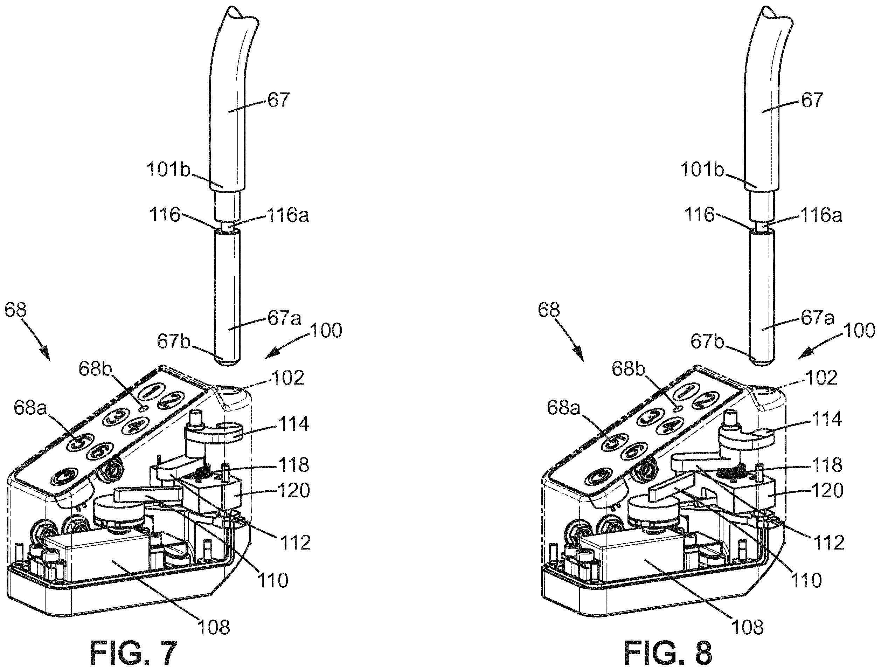

En se référant maintenant aux figures 7 à 10, le verrou d'antivol 68 inclut un actionneur, par exemple un moteur électrique 108, qui est actionné par l'unité centrale 60 du cycle (ou par une unité centrale du verrou d'antivol 68) lorsque l'utilisateur entre son code secret sur le clavier 68a.

L'actionneur 108 entraîne un bras 110, par exemple pivotant autour d'un axe de rotation vertical. Le bras 110 est adapté pour buter de façon sélective sur un organe de verrouillage 112 monté pivotant dans le verrou 68, par exemple autour d'un axe de rotation vertical.

L'organe de verrouillage 112 inclut un doigt 114 adapté pour pénétrer dans l'ouverture 102 du verrou d'antivol. L'organe de verrouillage 112 est monté pivotant entre une position de fermeture où le doigt 114 obture l'ouverture 102 du verrou d'antivol 68 et une position de déverrouillage où le doigt 114 libère l'ouverture 102 du verrou d'antivol 68 de façon à ne pas interférer avec la broche 67a. L'organe de verrouillage 112 est sollicité élastiquement par un ressort 118 vers sa position de fermeture. En position de repos de l'actionneur 108, le bras 110 n'interfère pas avec l'organe de verrouillage 112. Lorsque l'actionneur 108 est activé par l'entrée du code secret sur le clavier 68a, le bras fait pivoter l'organe de verrouillage par effet de came, pour la placer en position de déverrouillage contre la sollicitation du ressort 118.

Lorsque la broche 67a du câble d'antivol est placée en position de verrouillage dans les ouvertures 102, 106 susmentionnées, le doigt 114 de l'organe de verrouillage s'engage dans une rainure 116a de la broche 67a et empêche la sortie de la broche 67a, par butée dudit doigt 114 contre un des épaulements 116 qui délimitent la rainure 116a.

Le système antivol 100 inclut, préférentiellement, de plus un capteur de verrouillage, par exemple un potentiomètre 120, dans le verrou d'antivol 68 qui permet de détecter la position de l'organe de verrouillage 112, notamment la position verrouillée. Le clavier 68a du verrou d'antivol 68 peut comporter un voyant 68b (LED ou autre) qui s'allume en fonction de la position de l'organe de verrouillage 112.

Le système antivol 100 inclut, préférentiellement, de plus un capteur de broche 122 (capteur à effet Hall ou autre). Le capteur 122 est positionné dans une partie inférieure du verrou d'antivol 68 et sous l'organe de blocage de fourche 104, pour détecter la position de verrouillage de la broche 67a.

Le cycle 1 peut en outre comporter un dispositif de blocage de chaîne 210 (LCK CH) commandé par l'unité centrale 60 du cycle (voir la figure 4) et interagissant sur la chaîne CH du cycle.

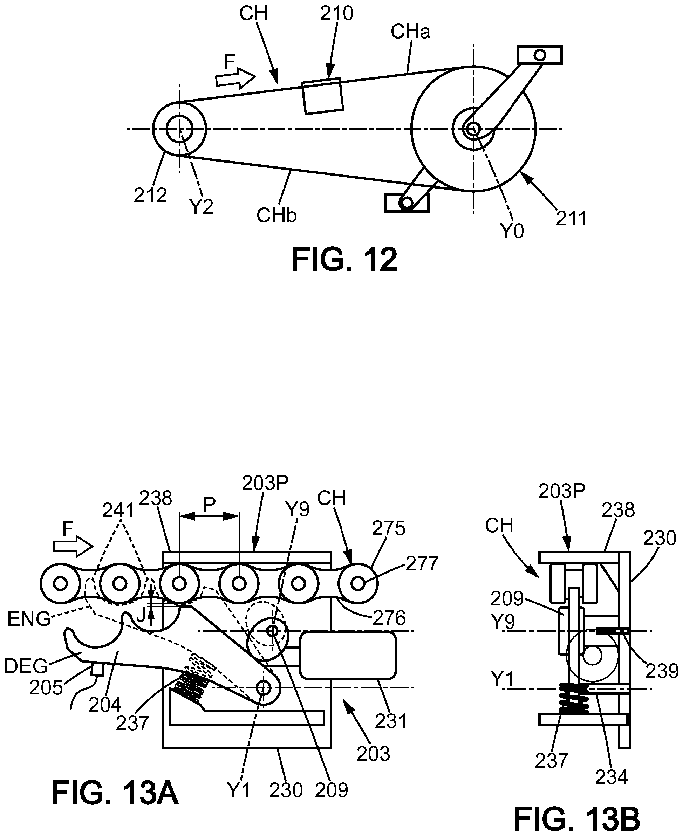

Comme représenté à la figure 12, le pédalier 211 du cycle comporte un plateau (couronne) à denture sur lequel est engrenée la chaîne de transmission CH qui est également engrenée sur un pignon 212 relié au moyeu de la roue 1b arrière. Le plateau du pédalier est monté à rotation autour de l'axe Y0 et le pignon de roue arrière est monté à rotation autour de l'axe de roue arrière Y2.

Dans l'exemple illustré, on installe le dispositif antivol 210 sur le brin 'aller' (repéré CHa) de la chaîne, à savoir le brin supérieur, par lequel transite l'essentiel des efforts vers la roue arrière 1b.

Selon un premier mode de réalisation du dispositif de blocage de chaîne 210, on prévoit un élément de blocage 204 déplaçable entre une position de dégagement DEG et une position d'engagement ENG en prise sur la chaîne.

Plus précisément, dans la position d'engagement ENG, l'élément de blocage interfère avec les maillons de la chaîne et empêche la chaîne d'avancer en direction du pédalier flèche F. À l'inverse, dans la position de dégagement DEG, le levier de blocage est écarté de la position précédente et n'offre plus aucune obstruction à l'avancement de la chaîne ; il est même prévu un jeu fonctionnel J qui permet un certain débattement vertical dynamique de la chaîne sans pour autant être entravée par le contact ou une interférence avec l'élément de blocage 204.

Dans l'exemple illustré particulièrement aux figures 13A et 13B, l'élément de blocage se présente comme un levier pivotant 204, monté à rotation autour d'un axe Y1. Par exemple, le levier pivotant est monté sur un pion d'axe 234, avec interposition d'une bague en bronze ou en téflon. Lorsqu'il tourne dans le sens trigonométrique, le levier 204 se déplace dans la direction de dégagement DEG, alors que lorsqu'il tourne dans le sens des aiguilles d'une montre il se déplace vers la position d'engagement ENG.

Le levier pivotant s'étend entre une première extrémité au niveau de l'axe de rotation Y1 et une deuxième extrémité qui est munie d'une denture 241 prévue pour coopérer par engagement dans les maillons de la chaîne. Dans l'exemple illustré, trois dents sont représentées, mais cela pourrait fonctionner avec une seule dent, deux, ou plus de trois. Les dents sont espacées conformément au pas de chaîne P, ce qui procure une bonne complémentarité entre les dents de l'élément de blocage et les rouleaux des maillons de la chaîne.

Quant à la chaîne CH, celle-ci est tout à fait classique, elle est formée par une succession de maillons qui comprennent chacun un rouleau 275 monté sur un petit axe 277, et des plaquettes à trous 276 qui raccordent les axes de rouleaux ; ce type de chaîne est connu en soi, et donc non détaillé plus amplement ici.

Le dispositif de blocage comprend une platine-support 203P fixée rigidement sur le cadre structurel 1d du cycle ; cette platine support comprend typiquement une face principale verticale 230 qui est prolongée à 90° par une paroi supérieure 238 agencée juste au-dessus du brin aller CHa de la chaîne.

Selon l'exemple illustré, une came 209 montée à rotation autour d'un axe repéré Y9 est configurée pour déplacer le levier pivotant vers la position de dégagement ; à l'inverse, un ressort de rappel repéré 237 repousse le levier pivotant vers la position d'engagement ENG. Les rôles entre la came commandée et le ressort de rappel pourraient bien entendu être inversés dans une autre configuration.

Le mouvement de la came est commandé par un moteur électrique repéré 231 avec préférentiellement interposition d'une transmission à réduction par vis-écrou qui permet à la came d'être maintenue en position courante sans bouger si le moteur n'est pas commandé, quel que soit le niveau de vibrations et sollicitations mécaniques extérieures. Autrement dit, il s'agit d'un réducteur non réversible.

Le moteur électrique, le réducteur et la came forme ensemble un actionneur électromécanique au sens de la présente invention repérée génériquement par 203 ; d'autres solutions pour l'actionneur électromécanique ne sont pas exclues comme par exemple un solénoïde, un petit vérin linéaire électrique, etc.

En outre, il est prévu un capteur de position repéré 205 qui détecte positivement que le levier de blocage 204 trouve dans la position de dégagement DEG et communique avec l'unité centrale 60 du cycle. On peut choisir préférentiellement un capteur à effet hall avantageux pour son faible encombrement et sa grande fiabilité.

La came tourne autour de l'axe Y9 de butée à butée, lesdites butées pouvant être des butées mécaniques et/ou des butées électriques ; la commande du moteur est de type temporisation, suffisante pour aller de butée à butée.

La course angulaire autour de l'axe de rotation Y9,Z1 sera typiquement prédéfinie comprise entre un quart de tour et trois-quarts de tour.

En option, dans le sens du déverrouillage, on peut utiliser le retour du capteur de position 205 pour arrêter la commande du moteur au moment le plus approprié.

Dans un deuxième mode de réalisation du dispositif de blocage de chaîne, l'élément de blocage 204 peut être un levier basculant monté à rotation autour de l'axe horizontal Y1 sur un socle 281 ancré par rapport au carter cadre 1d.

Le levier basculant 204 comprend un corps allongé 242 réalisé par exemple en métal découpé plié ou en plastique haute performance, de préférence obtenu par un flan métallique découpé plié, ledit corps allongé et s'étendant essentiellement dans la direction longitudinale L du vélo ; le levier comprend sur son extrémité arrière une denture 241 analogue à celle déjà décrite pour le premier mode, qui vient s'insérer entre les rouleaux des maillons de la chaîne en position d'engagement ENG; par ailleurs à cette extrémité arrière, il est aussi prévu un élément magnétique 245 qui coopère avec le capteur de position 205.

Le corps allongé est complété par une pièce transversale 243 laquelle est équipée d'un doigt 244 dirigé vers le bas, lequel doigt coopère avec la came de commande 209. Il peut être prévu une bille en extrémité de doigt, ou un rouleau ou tout autre élément à bas coefficient de friction ce qui facilite le glissement sur les formes de la came.

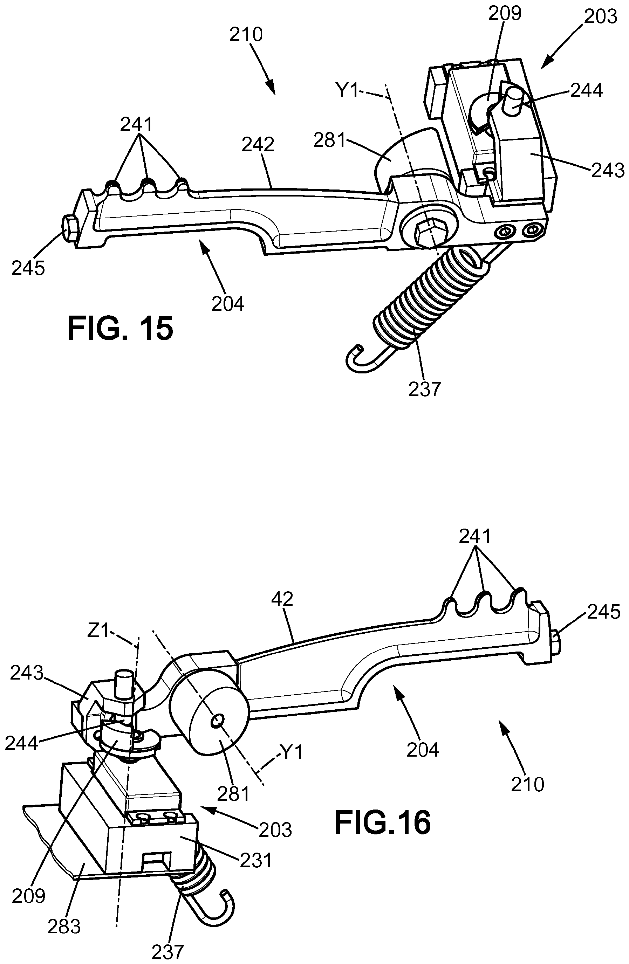

Ici la came 209 est montée à rotation autour de l'axe Z1 qui correspond substantiellement avec la verticale dans la position normale du vélo. Comme visible sur la figure 16, cette came comprend un corps 290 avec une zone annulaire d'actuation avec une rampe 291.

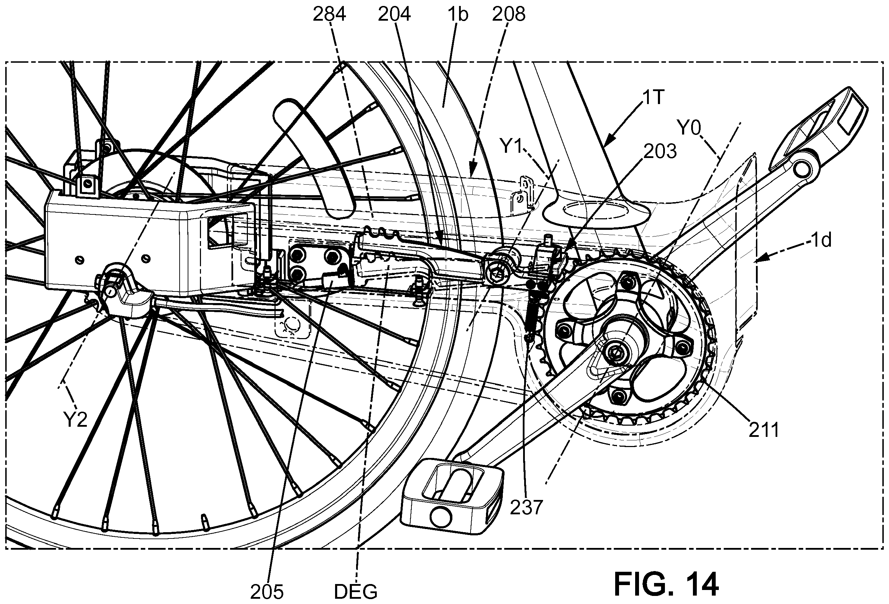

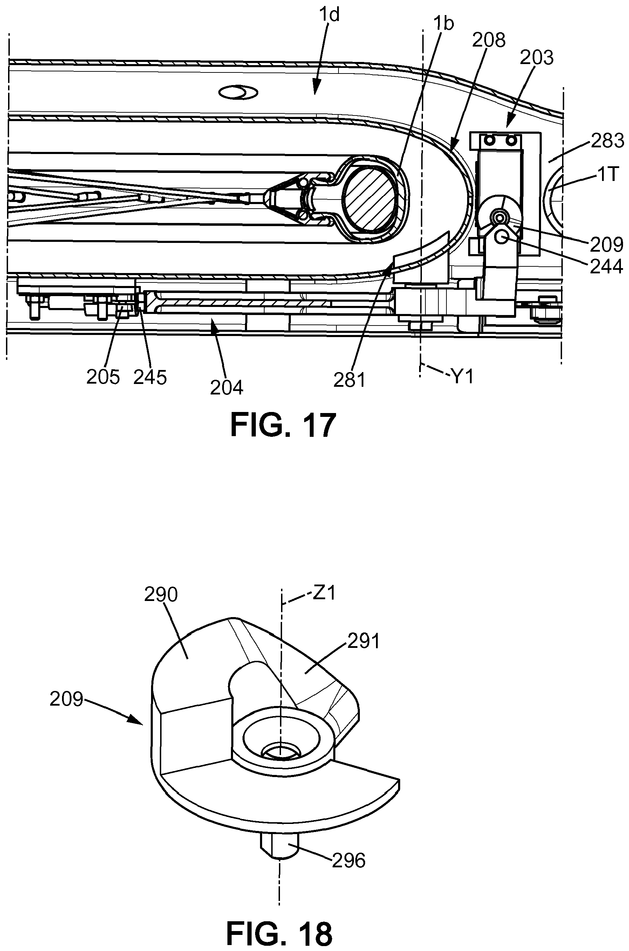

Comme visible sur les figures 14 à 17, le moteur 231 peut être logé astucieusement juste en arrière du tube de selle 1T et en avant de la roue arrière 1b, dans un emplacement habituellement non occupé ; ainsi l'adjonction de la fonction blocage à chaîne se fait dans les dimensions du cadre de vélo habituel.

Dans le contexte du second mode de réalisation, il est prévu de pouvoir verrouiller la chaîne dès lors que des conditions d'utilisation non légitimes du cycle sont détectées ; par exemple l'unité de commande 6 embarquée à bord du cycle peut avantageusement détecter un déplacement substantiel du cycle soit en constatant que les roues tournent ou par localisation fine GPS / Galileo et dans les conditions où le cycle est supposé être attaché et sécurisé à un poste de verrouillage 7, alors l'unité de commande 6 peut décider de son propre chef d'activer le verrouillage de la chaîne.

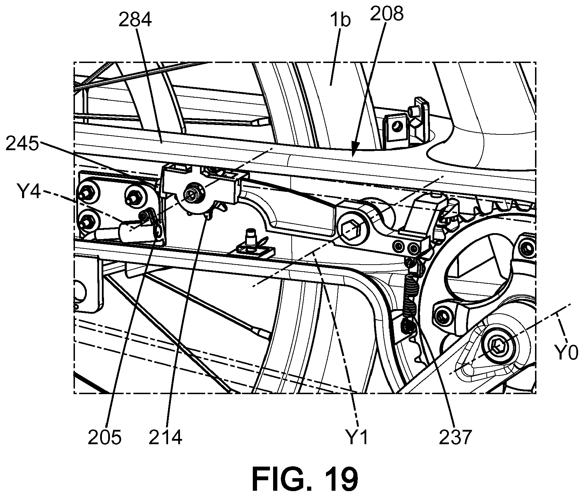

Comme représenté sur la figure 19, une variante du second mode de réalisation consiste à remplacer la denture fixe 241 par un pignon freiné 214.

Le pignon freiné 214 fournit un effort important de frottement à l'encontre du mouvement proche d'un blocage.

Le système qui vient d'être décrit fonctionne comme suit.

Lorsqu'un utilisateur veut emprunter un cycle 1 sur l'une des bornes de verrouillage 7, il peut par exemple faire lire une carte ou un ticket à puce électronique sans contact (NFC ou autre) par le lecteur 6a de la borne interactive ou par un lecteur similaire éventuellement prévu sur un poste de verrouillage 7, ou encore il peut insérer une carte électronique portative dans le lecteur 5 de la borne interactive 2 puis rentrer un code secret correspondant à cette carte, au moyen du clavier 3, de façon à s'identifier auprès de ladite borne interactive.

Après avoir vérifié les droits de l'utilisateur avec le serveur S1, la borne interactive 2 donne une autorisation de déverrouillage à l'un des postes de verrouillage 7.

En même temps qu'elle donne cette autorisation de déverrouillage, la borne interactive envoie à l'unité centrale 60 du cycle, le code secret de l'utilisateur, qui permet d'actionner le verrou d'antivol 68 à l'aide de l'interface utilisateur 68a. Ce code secret peut être connu d'avance et stocké dans le serveur SI si l'utilisateur est abonné au service. En variante, le code secret peut être déterminé au moment où l'utilisateur emprunte le cycle et peut être communiqué à ce moment à l'utilisateur, par impression sur un ticket par envoi vers le téléphone mobile de l'utilisateur ou autre.

La borne interactive 2 envoie le code secret à l'unité centrale 60 du cycle 1 par l'intermédiaire des interfaces de 17, 22 et / ou par l'intermédiaire des interfaces de communication radio 53, 60a.

L'utilisateur peut déverrouiller le cycle 1 qui lui a été attribué, par exemple en appuyant sur un bouton 63 prévu sur le poste de verrouillage correspondant, ce qui provoque la coupure de l'alimentation électrique des contacts 17 par le dispositif d'alimentation 58 et la commande de l'actionneur de déverrouillage 57 par l'unité centrale 56 du poste de verrouillage 7 pour faire passer l'organe de verrouillage 16 en position escamotée. L'utilisateur peut alors prendre le cycle 1, et l'unité centrale électronique 56 du poste de verrouillage 7 repère alors l'enlèvement du cycle 1 puisqu'elle ne peut plus communiquer avec l'unité centrale 56 de ce cycle par les contacts 17, 22. L'unité centrale électronique 56 du poste de verrouillage 7 informe alors la borne interactive 2 de cet enlèvement.

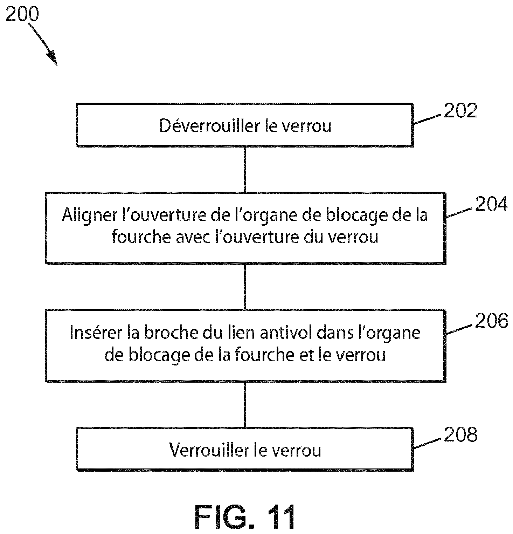

Pendant la durée de l'emprunt du cycle 1, l'utilisateur peut vouloir s'arrêter temporairement. Il utilise dans ce cas le système antivol 100 pour sécuriser le cycle 1. L'utilisateur suit alors les étapes du procédé 200 illustré sur la figure 11.

L'organe de verrouillage 112 du cycle est initialement en position de fermeture (Figure 7) et le bras 110 de l'actionneur 108 n'interfère pas avec l'organe de verrouillage.

À l'étape 202, l'utilisateur déverrouille le verrou d'antivol 68. Pour ce faire, l'utilisateur appuie sur une touche de verrouillage 68c sur le clavier 68a (voir la figure 5), de sorte que le verrou d'antivol 68 est activé et l'actionneur 108 déplace l'organe de verrouillage 112 de la position fermée (figure 7) à la position de déverrouillage (figure 8) libérant ainsi l'ouverture 102 du verrou d'antivol 68.

À l'étape 204, l'utilisateur fait pivoter la fourche 1c du cycle de façon à aligner l'ouverture 106 de l'organe de blocage de la fourche 104 avec l'ouverture 102 du verrou d'antivol 68, ce qui positionne la fourche 1c à un angle non nul avec la direction longitudinale L du cadre 1d.

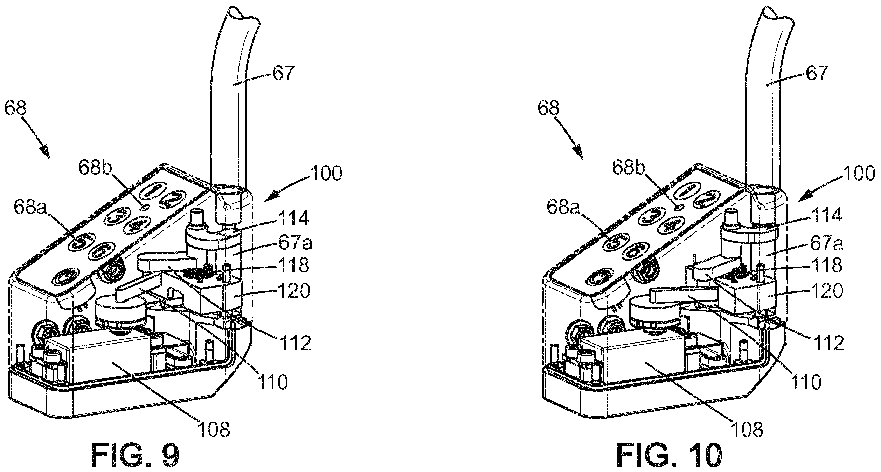

À l'étape 206, l'utilisateur insère la broche 67a du lien antivol 67 dans l'ouverture 106 de l'organe de blocage de la fourche 104 et l'ouverture 102 du verrou d'antivol 68. Le capteur de broche 122 détecte alors la présence de l'extrémité 67b de la broche 67a (figure 9), ce qui montre que la broche 67a est en position de verrouillage.

Le signal du capteur de broche 122 est transmis à l'unité centrale 60 du cycle (ou le cas échéant à une unité centrale du verrou d'antivol 68) qui remet l'actionneur en position de repos à l'étape 208, de sorte que le doigt 114 de l'organe de verrouillage 112 s'engage dans la rainure 116a de la broche 67a et verrouille ladite broche (figure 10).

Pour réutiliser le cycle, l'utilisateur entre à nouveau son code secret sur le clavier 68a, ce qui replace l'organe de verrouillage 112 en position de déverrouillage comme expliqué précédemment. L'organe de verrouillage 112 peut ensuite être remis automatiquement en position de fermeture par l'unité centrale 60 du cycle, par exemple après une certaine temporisation et / ou après détection par le capteur de broche 122, que la broche 67a n'est plus en position de verrouillage.

En fin d'utilisation du cycle, lorsque l'utilisateur rend le cycle 1 et le met en place sur un poste de verrouillage 7, il engage le premier organe d'accrochage 18 dans la gâche 8 du poste de verrouillage, de sorte que les contacts électriques 17, 22 sont connectés ensemble et que les unités centrale 56, 60 peuvent communiquer ensemble.

Lorsque le cycle 1 est verrouillé sur le poste de verrouillage 7, l'unité centrale 56 du poste de verrouillage repère la présence du cycle 1 en communiquant avec l'unité centrale 60 du cycle.

L'unité centrale 60 du cycle peut alors communiquer à l'unité centrale 56 du poste de verrouillage, un identifiant unique du cycle 1.

L'unité centrale 56 du poste de verrouillage communique, par les interfaces de communication 54,55, avec l'unité centrale 50 de la borne interactive 2, pour lui signaler la présence du cycle et lui transmettre l'identifiant de ce cycle.

L'unité centrale électronique 50 de la borne interactive 2 signale alors la fin de la période d'emprunt du cycle au serveur S1, et l'unité centrale 56 du poste de verrouillage active le dispositif d'alimentation électrique 58 pour recharger la batterie 61 du cycle. Dans le même temps, l'unité centrale 50 de la borne interactive 2 transmet au serveur de gestion SI l'identifiant unique du cycle 1 qui vient d'être remis en station, ainsi qu'éventuellement le paramètre de charge mesuré lors de la remise du cycle 1 à la station BS.

La borne interactive 2 et / ou le serveur de gestion SI mémorise alors l'identifiant du cycle 1 remis à la station de stockage de cycles BS et l'instant t0 de remise du cycle 1 à la station BS.

En fin d'utilisation du cycle, il est possible que l'utilisateur arrive à une station BS pleine.

Dans ce cas, le système de mise à disposition de cycles permet malgré-tout à l'utilisateur de rendre son cycle 1 sans avoir à rechercher une station BS ayant un poste de verrouillage 7 libre.

L'utilisateur peut ainsi être autorisé à stationner le cycle 1 dans la zone de dépose de cycles 69. La zone de dépose de cycles 69 est dépourvue de poste de verrouillage 7, de sorte qu'elle peut recevoir un assez grand nombre de cycles 1 ; en contrepartie, il est nécessaire de s'assurer que le cycle 1, déposé dans la zone de dépose de cycles 69, soit bien immobilisé afin d'éviter qu'il ne soit volé.

A cet effet, l'utilisateur peut demander l'autorisation de stationner le cycle 1 dans la zone de dépose de cycles 69. Cette demande d'autorisation peut se faire par exemple au moyen d'une application chargée sur le téléphone mobile de l'utilisateur et communiquant avec l'un des serveurs susmentionnés, par exemple le serveur SI (cette communication peut se faire classiquement par le réseau de téléphonie mobile). Cette application peut par exemple comporter un bouton, affiché sur l'écran tactile du téléphone mobile, indiquant par exemple « overflow » ou « dépose en station pleine » ou autre. L'utilisateur peut simplement actionner ce bouton tactile lorsqu'il arrive à la station BS pleine.

Le serveur SI identifie l'utilisateur à l'aide de l'application mobile, par tout moyen d'identification connu (identification par simple repérage de l'identité du téléphone mobile, enregistré dans le serveur SI comme étant celui de l'utilisateur, identification par login et mot de passe, ou autre).

Le serveur SI a en mémoire l'identifiant du cycle 1 emprunté par l'utilisateur, et vérifie si le cycle 1 est en communication avec la borne interactive 2 d'une station BS par les interfaces de communication radio 53, 60a. Les interfaces de communication radio 53, 60a établissent une liaison radio courte portée (quelques dizaines de mètres, par exemple moins de 50 m) compte tenu du protocole de communication utilisé, et la communication radio entre le cycle 1 et la borne interactive 2 de la station BS s'établit automatiquement dès lors que le cycle 1 est à proximité de la borne interactive 2. Le serveur S1 détermine ainsi à quelle station BS se trouve l'utilisateur.

Le serveur S1 vérifie également que tous les postes de verrouillage 7 de la station BS sont occupés, et si la zone de dépose de cycles 69 n'est pas pleine (en fonction d'une capacité d'accueil maximale de la zone de dépose de cycles 69 et du nombre de cycles 1 précédemment autorisés à stationner dans la zone de dépose de cycles 69).

Si tous les postes de verrouillage 7 de la station BS sont occupés et si la zone de dépose de cycles 69 n'est pas pleine, alors le serveur S1 autorise le stationnement du cycle 1 dans la zone de dépose de cycles 69. Le cas échéant, cette autorisation peut être soumise à d'autres conditions supplémentaires, par exemple une autorisation générale préalable d'accès de l'utilisateur à ce service.

Une fois l'autorisation accordée, le serveur S1 fait afficher un message par l'application du téléphone mobile, pour signifier à l'utilisateur qu'il peut déposer le cycle 1 dans la zone de dépose de cycles 69 et qu'il doit verrouiller le système antivol du cycle 1.

L'utilisateur dépose alors le cycle 1 dans la zone de dépose de cycles 69 et verrouille la broche 67a du câble d'antivol 67 dans le verrou d'antivol 68, comme expliqué précédemment. De préférence, l'utilisateur passe le câble d'antivol 67 autour d'un élément fixe tel qu'un poteau, un arbre, un cycle 1 précédemment déposé dans la zone de dépose de cycles 1, etc. Quoi qu'il en soit, même si l'utilisateur n'utilise pas correctement la câble d'antivol 67, le cycle 1 se trouve immobilisé par le blocage de la fourche en position tournée, comme expliqué ci-dessus. Une fois verrouillée la broche 67a du câble d'antivol 67 dans le verrou d'antivol 68, le cycle 1 émet un message radio vers la borne interactive 2 par l'interface de communication radio 60a, confirmant le verrouillage du cycle 1.

La borne interactive 2 communique cette information au serveur S1, qui considère alors le cycle 1 comme rendu et confirme cette information à l'utilisateur par un message envoyé par l'application du téléphone mobile de l'utilisateur. De plus, la borne interactive 2 envoie alors, par l'interface de communication radio 53, un ordre à l'unité centrale 60 du cycle pour que celle-ci efface le code secret de l'utilisateur permettant de déverrouiller le verrou d'antivol 68. L'utilisateur ne peut donc plus reprendre le cycle 1.

On notera que les cycles pourraient être rendus simplement au voisinage de la station BS lorsque celle-ci est pleine sans être spécifiquement dans la zone de dépose de cycles 69. Eventuellement, la station BS pourrait d'ailleurs ne pas comporter de la station BS de zone de dépose de cycles 69 spécifique.

On notera également qu'au lieu du système antivol 100 susmentionné, le cycle 1 pourrait être immobilisé au voisinage de la station BS par tout autre dispositif d'immobilisation du cycle 1 commandé un code secret entré par une interface utilisateur du cycle, ce code secret étant reçu par le cycle au moment de la prise du cycle 1 ou à tout moment pendant l'utilisation du cycle 1. A titre d'exemple, un tel autre dispositif d'immobilisation pourrait être le dispositif de blocage de chaîne 210 susmentionné. Eventuellement, plusieurs dispositif antivol pourraient être utilisés simultanément pour immobiliser le cycle 1 (par exemple à la fois le système antivol 100 et le dispositif de blocage de chaîne 210).

Les cycles déposés en station hors des postes de verrouillage 7, comme il vient d'être décrit, peuvent éventuellement être attribués ultérieurement à d'autres utilisateurs. Ainsi, lorsqu'un nouvel utilisateur se présente à la station BS pour emprunter un cycle 1, en utilisant l'application susmentionnée sur son téléphone mobile ou en utilisant la borne interactive 2, l'application ou la borne interactive peut lui désigner l'un des cycles 1 déposés en station hors des postes de verrouillage 7 (de préférence le dernier cycle déposé pour être sûr que l'utilisateur puisse le prendre, pour le cas où les cycles 1 sont verrouillés les uns aux autres) . L'utilisateur peut être déjà en possession de son code secret d'antivol si c'est un abonné, ou bien il reçoit ce code de l'application ou de la borne interactive. La borne interactive transmet ce code secret d'antivol à l'unité centrale 60 du cycle 1 ainsi désigné, de sorte que l'utilisateur peut alors prendre le cycle 1 en déverrouillant le système antivol 100 ou tout autre dispositif d'immobilisation de cycle 1 en entrant le code secret sur l'interface utilisateur du cycle 1.

## Revendications

1. Système automatique de mise à disposition de cycles comprenant :
- une pluralité de cycles (1) comportant chacun :
- au moins une unité centrale électronique (60) ayant en mémoire un code secret d'antivol propre à un utilisateur au moins à un instant donné,
- un dispositif antivol (100, 210) comportant un dispositif de blocage électrique (68, 210) adapté pour immobiliser le cycle (1) et commandé par l'unité centrale électronique (60),
- une interface utilisateur (68a) communiquant avec ladite unité centrale électronique (60) et permettant à un utilisateur d'entrer le code secret d'antivol,
- et une interface de communication radio courte portée (60a) reliée à l'unité centrale électronique (60) du cycle,
- une pluralité de stations (BS) comportant chacune des postes de verrouillage (7) où peuvent se verrouiller les cycles (1) et une interface de communication radio courte portée (53) adaptée pour communiquer avec l'interface de communication radio courte portée (60a) des cycles,
- des moyens de commande (S1, 2) adaptés pour sélectivement libérer les cycles (1) des postes de verrouillage sur demande d'un utilisateur, les moyens de commande (S1, 2) communiquant avec les cycles (1) situés aux stations (BS) ou à proximité par lesdites interfaces de communication radio courte portée (53) des stations (BS), les moyens de commande étant adaptés pour autoriser un utilisateur à rendre un cycle (1) hors des postes de verrouillage (7) d'une station (BS) donnée et pour considérer le cycle comme effectivement rendu si l'unité centrale (60) du cycle confirme par l'intermédiaire des interfaces de communication radio courte portée (60a, 53) dudit cycle et de ladite station donnée, que le dispositif électrique de blocage (68, 210) du dispositif antivol (100, 210) du cycle (1) immobilise effectivement le cycle (1).

2. Système selon la revendication 1, dans lequel les interfaces de communication radio courte portée (53, 60a) des stations (BS) et des cycles (1) ont une portée inférieure à 50m.

3. Système selon la revendication 1 ou la revendication 2, dans lequel le cycle (1) comporte au moins un capteur (120, 205) communiquant avec l'unité centrale électronique (60) du cycle et apte à détecter que le dispositif antivol (100, 210) immobilise le cycle (1).

4. Système selon l'une quelconque des revendications précédentes, dans lequel le dispositif antivol (100) comporte un lien antivol (67).

5. Système selon l'une quelconque des revendications précédentes, dans lequel chaque cycle (1) comporte une fourche pivotante (1c) portée par une roue (1b) avant, et le dispositif antivol (100) est adapté pour bloquer la fourche (1c) dans une position tournée où la roue avant fait un angle avec une direction longitudinale (L) du cycle.

6. Système selon l'une quelconque des revendications précédentes, dans lequel le dispositif antivol (210) est adapté pour bloquer une chaîne de transmission mécanique (CH) du cycle.

7. Système selon l'une quelconque des revendications précédentes, dans lequel les moyens de commande (S1, 2) sont adaptés pour communiquer le code secret d'antivol à l'unité centrale (60) du cycle.

8. Système selon la revendication 7, dans lequel les moyens de commande (S1, 2) sont adaptés pour communiquer le code secret d'antivol à l'unité centrale (60) du cycle au moment où le cycle est attribué à un utilisateur.

9. Système selon l'une quelconque des revendications précédentes, dans lequel les moyens de commande (S1, 2) sont adaptés pour commander à l'unité centrale (60) du cycle d'effacer le code secret d'antivol lorsque le cycle est considéré comme effectivement rendu.

10. Système selon l'une quelconque des revendications précédentes, dans lequel les moyens de commande (S1, 2) sont adaptés pour autoriser un utilisateur à rendre un cycle (1) hors des postes de verrouillage (7) d'une station (BS) donnée, après avoir vérifié que l'interface de communication radio courte portée (60a) du cycle communique par radio avec l'interface de communication radio courte portée (53) de la station et que la station (BS) ne comporte pas de poste de verrouillage (7) disponible.

11. Système selon l'une quelconque des revendications précédentes, dans lequel les moyens de commande (S1, 2) sont adaptés pour communiquer avec une application chargée sur un mobile propre à l'utilisateur, et ladite application est adaptée pour demander l'autorisation aux moyens de commande (S1, 2) de rendre un cycle (1) hors des postes de verrouillage (7) d'une station (BS) et pour recevoir ladite autorisation des moyens de commande (S1, 2).
